# EUROPÄISCHE PATENTANMELDUNG

(11) **EP 1 116 526 A2**
(43) Veröffentlichungstag der Anmeldung: **18.07.2001**
(21) Anmeldenummer: 01100492.6
(22) Anmeldetag: 09.01.2001
(51) Int. Cl.: B09B 1/00

(54) **Mineralische Deponieabdichtungssysteme und/oder die Stabilisierung von Deponien**

(30) Priorität: 14.01.2000 DE 10001276
(71) Anmelder: Bilke, Lutz, 06526 Sangerhausen (DE)
(72) Erfinder: Die Erfindernennung liegt noch nicht vor

(57) **Zusammenfassung**

Die Erfindung betrifft mineralische Oberflächen- und Zwischenabdichtungssysteme für Deponien und Absicherung von Altlastenstandorten unter Verwendung von industriellen Abfallstoffen und ein Verfahren zur Herstellung, Aufbereitung und Einbau dieser, den Einsatz in Rekultivierungsschichten und ein Verfahren zur Herstellung dieser, wobei die industriellen Abfallstoffe als Ersatzbaustoffe in mineralischen Dichtungssystem oder Rekultivierungsschichten (2) eingesetzt werden, vorzugsweise unter Verwendung von bentonitgebundenen Gießereialtsanden, -stäuben (5.1) und/oder Klärschlämmen und die zeitliche Verkürzung der Nachsorge durch Kombinationsstabilisierung von Deponien und Verfahren hierzu.

Bei der mineralischen Dichtungsschicht (5) für Deponien und zur Abdeckung von Altlastenstandorten und ein Verfahren zur Herstellung dieser, werden natürliche Erdbaumaterialien ausgetauscht ohne die Eigenschaften der Dichtungsmassen zu beeinträchtigen. Der Vorteil dieser Erfindung besteht darin, dass bei den erfindungsgemäß dargestellten mineralischen Deponiedichtungen, unter Verwendung von geeigneten wasseraufnahmefähigen Zuschlagstoffen, ein mineralisches Dichtungsmaterial hergestellt wird, dass hinsichtlich der Rissanfälligkeit und den k-Werten bessere Ergebnisse aufweist, als bei Standartsystemen.

## Beschreibung

Die Erfindung betrifft mineralische Oberflächen- und Zwischenabdichtungssysteme für Deponien und Absicherung von Altlastenstandorten unter Verwendung von industriellen Abfallstoffen und ein Verfahren zur Herstellung, Aufbereitung und Einbau dieser, den Einsatz in Rekultivierungsschichten und ein Verfahren zur Herstellung dieser, wobei die industriellen Abfallstoffe als Ersatzbaustoffe in mineralischen Dichtungssystemen oder Rekultivierungsschichten eingesetzt werden, vorzugsweise unter Verwendung von bentonitgebundenen Gießereialtsanden, -stäuben und/oder Klärschlämmen und/oder die zeitliche Verkürzung der Nachsorge durch Kombinationsstabilisierung von Deponien und Verfahren hierzu.

In der Druckschrift WO 89 01547 A1 wird erfindungsgemäß ein Verfahren dargestellt, welches zum Abdichten von Bodenformationen, insbesondere für die Herstellung von Deponien mittels getrockneten Klär- und Gewässerschlämmen bei einem TS-Gehalt von ≤ 70%, anderen getrockneten Zuschlagstoffen, pulverförmigem Wasserglas und Weichgehlbildnern hergestellt wird. Der Nachteil dieses Verfahrens besteht darin, dass die wasserglasvergüteten Dichtungssysteme aus Abfallstoffen und Recyclingmaterialien, den Einsatz von kostenaufwendigen Gehlbildnern, zur Verringerung der Wasserdurchlässigkeit erfordern.

Vom Stand der Technik ist bekannt, dass labortechnische und baupraktische Untersuchungen durch Wasserglasvergütungen von Klärschlammgemischen durchgeführt wurden, die zur Herstellung von mineralischen Dichtungen führten. Wesentliche Voraussetzung für die Wasserglasvergütung ist ein kornabgestuftes und ausreichend wasserhaltiges Gemisch, das noch in sich verdichtungsfähig und somit abdichtungsfähig ist.

Die Druckschrift DE 195 40 387 C2 beinhaltet ein Verfahren für die Herstellung von multimineralischen Dichtungen, bei der die hochwertigen, natürlichen, tonigen, schluffigen, sandigen und kiesigen Erdbaumaterialien teilweise durch billige Ersatzbaustoffe, wie bentonithaltige Gießereialtsande und Gießereischlacken ausgetauscht werden.

Nach der Technischen Anleitung (TA) Siedlungsabfall ist vorgeschrieben:
- eine Kombinationsdichtung aus einer Kunststoffdichtungsbahn (KDB) und mineralischen Barrieren nach dem Multibarrierekonzept für Sonder- und Siedlungsabfälle für oberirdische Deponien herzustellen,
- der Feinstkornanteil (< 0,002mm) muss nach DIN 18 123 mindestens 20% betragen,
- die Wasserdurchlässigkeitsbeiwerte [k - Werte] für Basisabdichtungen betragen k ≤ 5 x 10⁻¹⁰ m/s und für Oberflächenabdichtungen k ≤ 5 x 10⁻⁹ m/s.

Die Aufgabe der Erfindung ist es, in eine mineralische Dichtungsschicht für Deponieabdeckungen und Zwischenabdeckungen, Abdeckungen von Altlasten und Rekultivierungsschichten den Einsatz von Ersatzbaustoffen zu prüfen und ein Verfahren zur Herstellung dieser zu schaffen, bei dem die natürlichen tonigen, schluffigen, sandigen und kiesigen Erdbaumaterialien teilweise durch billige Ersatzbaustoffe ausgetauscht werden, ohne die Eigenschaften der Dichtungsmassen bzw. Rekultivierungsschicht zu beeinträchtigen. Die erforderlichen Werte von k ≤ 5 x 10⁻⁹ m/s in der mineralischen Dichtung sind abzusichern. Weiter Aufgaben sind die kostengünstige und zeitliche Verkürzung der Nachsorge, sowie Langzeitsicherungsmaßnahmen von Deponien.

Erfindungsgemäß wird die Aufgabe nach den in dem Patentanspruch 1 und 2 angegebenen Merkmalen gelöst. Bevorzugte Weiterbildung der Erfindung ergeben sich aus den jeweiligen Unteransprüchen.

Die Vorteile der Erfindung bestehen darin, dass bei mineralischen Oberflächenabdichtungen und Zwischenabdeckung und/oder Rekultivierungsschichten, die natürlichen tonigen, schluffigen, sandigen und kiesigen Erdbaumaterialien teilweise durch billige Ersatzbaustoffe wie bentonitgebundene Gießereialtsande, -stäube, geeignete ausgefaulte Gewässer- und/oder Klärschlämme ausgetauscht werden, ohne die Eigenschaften der Dichtungsmassen bzw. der Rekultivierungsschicht zu beeinträchtigen, wobei die Eigenschaften der mineralischen Dichtungsmaterialien hinsichtlich ihrer Rissanfälligkeit gegenüber den Standartsystemen wesentlich verbessert wird und die k-Werte unterschritten werden.

Durch die mit bentonitgebundenen Gießereialtsanden, -stäuben hergestellten mineralischen Dichtungen können Deponien kostengünstig gesichert und das Einkapslungsverfahren für Altlasten rationeller gestaltet werden. Durch die zusätzliche Verwendung von geeigneten ausgefaulten Gewässer- und/oder Klärschlämmen in Verbindung mit bentonitgebundenen Gießereialtsanden, -stäuben können Rekultivierungsböden für Deponieendabdeckungen kostengünstig hergestellt werden. Die eingesetzten Abfallstoffe werden stofflich, unter Beachtung der umweltunbedenklichen Parameter verwertet, wobei die so hergestellten mineralischen Dichtungen eine Langzeitbeständigkeit beim Durchströmen von kontaminiertem Wasser aufweisen.

Ausgangspunkt der Untersuchung waren geeignete bentonitgebundene Gießereialtsande, -stäube als Ersatzbaustoff in mineralischen Oberflächendichtungen einer Deponie. In der Betrachtung wurden bentonitgebundene Gießereialtsande und bentonitgebundene Gießereistäube gleichgestellt, da diese in ihren Eigenschaften gleich sind. Die Stäube sind lediglich in ihrer Kornabstufung feiner. Der Einsatz ist auch als Gemisch von bentonitgebundenem Gießereialtsand und bentonitgebundenem Gießereistaub möglich. Das im Gießereialtsand enthaltene Bentonit ist beim Gießprozess thermisch beeinflusst worden und weist besondere Eigenschaften auf, die sich in einer erhöhten Wasseraufnahmefähigkeit zeigt, die jedoch mit einer zeitlichen Verzögerung erst feststellbar ist.

Die bodenmechanischen Untersuchungen beweisen, dass die bentonitgebundenen Gießereialtsande, -stäube hinsichtlich ihrer Dichtungseigenschaften den Anforderungen an mineralische Deponieoberflächenabdichtungen entsprechen. Der Gießereialtsand besteht im wesentlichen aus feinem Quarzsand mit einem eng abgestuften Kornband aus Glanzkohlenstoffbildnern als Mineralphase und Gießereibentonit. Diese Abfallstoffe liegen in der Korngrößenverteilung ähnlich wie Lößboden im Bereich des Mittel- bis Grobschluffes.

Der Glanzkohlenstoffbildner ist mit 3 bis 10 Gewichtsprozentanteilen in dem Gießereialtsandgemisch vorhanden.

Wichtig ist festzustellen, dass es sich hierbei um einen organischen Kohlenstoff handelt, der zwar den Glühverlust negativ beeinflusst, aber sich nicht störend auf die Dichtungseigenschaften auswirkt, wie dies bei organischen Bestandteilen bzw. anderen organischen Kohlenstoffen der Fall ist.

Der Bentonitanteil im Gießereialtsand beträgt zwischen 3 und 15 Gewichtsprozentanteile. Die Mineralanalyse des aktivierten Gießereibentonites weist einen Montmorillolitanteil von über 70 Gewichtsprozentanteilen aus. Weitere Begleitminerale sind: Quarz, Kalzit, Dolomit und Feldspat. Der Glühverlust des Gießereibentonites ist nicht auf verbrannte Organik zurückzuführen, da das eingelagerte Wasser in der Gitterstruktur des Bentonites erst bei ca. 500°C freigesetzt wird.

Ausgangspunkt weiterer Untersuchungen waren geeignete Gewässer- und/oder Klärschlämme die ausgefault sind und mind. 30% Trockenrückstand [ TR ] aufweisen. Eine mechanische Vorentwässerung des Gewässer- und/oder Klärschlamms z.B. durch Kammerfilterpressen, Siebbandtrockner, Zentrifugen ist unbedingt erforderlich. Der eingedickte Klärschlamm kann durch Polymerkonditionierung mittels Bandfilterpressen oder Zentrifugen auf 18-30% TR entwässert werden. Ein erhöhter Entwässerungsgrad kann mittels Kammerfilterpressen durch den Einsatz von Metallsalz- oder PolymerKonditionierung erreicht werden. Hier ist die durchschnittliche Entwässerbarkeit von 28-35% TR erreichbar. Wird Kalk als Zuschlagstoff zusätzlich eingesetzt, ist eine Entwässerung von 38-45% TR möglich. Durch die mechanische Entwässerung kann das Haft- und Kapillarwasser des Klärschlamms größtenteils entfernt werden. Das Absorptions- und Innenwasser kann nur durch Trocknung entfernt werden (bis etwa 95% TR). Eine Verarbeitung bei < 30% TR ist auf Grund der breiigen Konsistenz nicht möglich. Der Einbauwassergehalt wird überschritten, somit ist eine optimale Verdichtung ausgeschlossen.

Erfindungsgemäß kann vorteilhaft im Klärwerk oder anderen Aufbereitungsanlagen, nach der maschinellen Entwässerung des Gewässer- oder Klärschlamms, zur Nachbehandlung trockener, bentonithaltiger Gießereialtsand und/oder -staub mit 5-35 Gew.% und einem Bentonitgehalt von 3-15 Gew.% eingemischt werden. Die hohe Wasseraufnahmefähigkeit (ca. 60-100%) dieser Abfallstoffe verringert den Wassergehalt des Klärschlammes um ca. 10-20% bei der vorzugsweisen Zugabe von 10 Gew.% trockenen bentonithaltigen Gießereialtsanden und/oder -stäuben. Auf eine Zumischung von Kalk kann dann verzichtet werden.

Die faserige Struktur des Gewässer- und/oder Klärschlammes, der aus einem Schlamm-Sandgemisch mit einem relativ hohen Wasserhaltevermögen besteht, hat hinsichtlich der Rissanfälligkeit gegenüber den herkömmlichen Standartabdichtungssystemen mit Ton und tonhaltigem Lehm eine erhebliche Verbesserung.

Vom Stand der Technik (DE 195 40 387 C2) ist bekannt, dass bentonithaltige Gießereialtsande, -stäube in mineralischen Dichtungssystemen eine gute Dichtungseigenschaft haben, aber auch erosionsanfällig sind.

Durch den Einsatz einer Schutz- und Drainagematte 3 und der Kunststoffdichtungsbahn 4 (KDB), welche vom Stand der Technik bekannt sind, wird diesem Nachteil entgegen gewirkt.

Der Einsatz von mineralischen Deponieoberflächenabdichtungen und Zwischenabdichtungen hat im wesentlichen die Hauptaufgabe, dass das Oberflächenwasser nicht in den Deponiekörper eindringt. Damit entsteht kein weiteres kontaminiertes Deponiewasser, welches mit hohen Kostenaufwand entsorgt werden muss. Die genannten Voraussetzungen erfüllen die bentonithaltigen Gießereialtsande, -stäube, mit einem optimalen Einbauwassergehalt von 5 bis 35 Gewichtsprozentanteilen. Die Wasserdurchlässigkeitsbeiwerte "k" des unterschiedlich lange feucht gelagerten Gießereialtsandes, -staubes erfüllen nach DIN 18130 die Bandbreite der Einbauparameter, die im Deponiebau zulässig sind. Dies ist im Bereich von 97% der einfachen Proctordichte auf der nassen Seite der Proctorkurve über 100% der Proctordichte bei einem optimalen Wassergehalt bis hin zu 97% der Proctordichte auf der trockenen Seite vorhanden. Die ermittelten k- Werte liegen wie nachstehend dargestellt, mit k = 1,6 x 10⁻¹¹ m/s bis k = 3,2 x 10⁻¹⁰ m/s durchweg unterhalb der nach den gesetzlichen Vorschriften für mineralische Oberflächenabdichtungen zulässigen Werte von k ≤ 5 x 10⁻⁹ m/s.

Der Einsatz von mineralischen Deponieabdichtungen hat im wesentlichen zwei Hauptaufgaben, welche im ZURÜCKHALTEN VON SCHADSTOFFEN UND DICHTEN (konvektioneller Wasserspeicher) bestehen. Eine hohe Dichtungswirkung wird dann erreicht, wenn eine maximale oder optimale Packungsdichte mit geringstem Porenvolumen des Dichtungsmaterials vorliegt. Die genannten Voraussetzungen werden erfindungsgemäß aus bodenmechanischer Sicht erreicht.

Die Struktur des bentonitgebundenen Gießereialtsandes und bentonitgebundenen Gießereistaubes mit einem relativ hohen Wasserhaltevermögen und SiO₂ - Gehalt, hat hinsichtlich der Rissanfälligkeit gegenüber den herkömmlichen Standartabdichtungssystemen mit Ton und tonhaltigen Lehm erhebliche Vorteile.

Es ist allgemein bekannt, dass bei mineralischen Böden, insbesondere Tone, selbst bei geringen Verformungen (Zugspannung) und schon bei geringen Wassergehaltsänderungen von Δ w ≈ 1% Rissbildungen auftreten und damit die Dichtungswirkung beeinträchtigen.

Die deutsche und europäische Gesetzgebung zur Nachsorge von Deponien fordern eine mindestens 30- jährige Kontrolle aller geschlossenen Deponien, um Nachfolgeschäden an der Natur und Umwelt zu vermeiden. Eine Prüfung nach diesem Zeitpunkt entscheidet, ob die Deponie weiter unter Beobachtung bleiben muss, oder diese aus der Nachsorge entlassen werden kann. Die Fachwelt ist sich jedoch darüber einig, dass zum Abbau dieser Restemissionspotentiale, insbesondere der Sickerwasserbehandlung, mit mindestens 100 bis 300 Jahre nach Deponieabschluss gerechnet werden muss.

Die hohen Nachsorgekosten über diese langen Zeiträume setzen sich aus den
- Analysekosten für Grund-, Sickerwasser und Deponiegas,
- Vermessung über das Setzungsverhalten des Deponiekörpers,
- Entsorgung von Deponiegas und Sickerwasser
- die bauliche Instandhaltung von Deponieeinfriedungen, Wegesystemen, Oberflächenabdichtungen, Entwässerungs,- Deponieentgasungssystemen
- sowie der Landschaftspflege zusammen.

Nach der Abdichtung mit den genannten Oberflächenabdichtungen ergeben sich Nachteile. Nach dem Verbrauch des Deponiewassers aus dem eingebrachten Abfall und dem Niederschlagswasser kommen innerhalb der ersten Jahre alle biologischen und chemische Aktivitäten zum Stillstand. Es kommt zur "Mumifizierung" des Abfalls. Bei unkontrolliertem Eindringen von Oberflächenwasser werden diese Aktivitäten, auch nach Jahrzehnten, wieder unkontrolliert in Gang gesetzt und können so zu erheblichen Schäden in der Umwelt führen.

Ziel der Erfindung ist Wege zu finden, die aktiven Emissionspotentiale zeitlich zu verkürzen. Hierzu sind folgende baulichen Voraussetzungen zu schaffen.
- funktionierende Basisabdichtung oder natürliche Barrieren
- funktionstüchtige Sickerwassererfassung,
- aktive Gaserfassung
- und funktionsfähige Oberflächen- und/oder Zwischenabdichtungssysteme.

Damit sind günstige Voraussetzungen geschaffen, wie in einem Bioreaktor, die biologischen und chemischen Prozesse im Deponiekörper zu steuern, um hohe biologische Stoffumsatzraten in kurzer Zeit zu erreichen.

Vom Stand der Technik ist bekannt, dass Versuche mit Rückbefeuchtung von geschlossenen Deponiekörpern über Lanzen, Rigole und Schluckbrunnen erfolgten, die jedoch durch den konzentrierten punktdualen Einsatz zu unkontrollierten Wasserbahnen im Deponiekörper führen und ohne das Ziel, biologische Aktivitäten auszulösen, dem Sickerwasser zugeführt werden.

Weiterhin ist bekannt, dass Versuche mit in situ Belüftungen von Siedlungsabfalldeponien zur aeroben Stabilisierung durchgeführt wurden. Nachteil dieser Methode ist, dass zwar eine zeitweise Aktivierung der Gasproduktion erfolgte, die jedoch abklingt wenn die Eigenfeuchte des Deponiekörpers verbraucht ist.

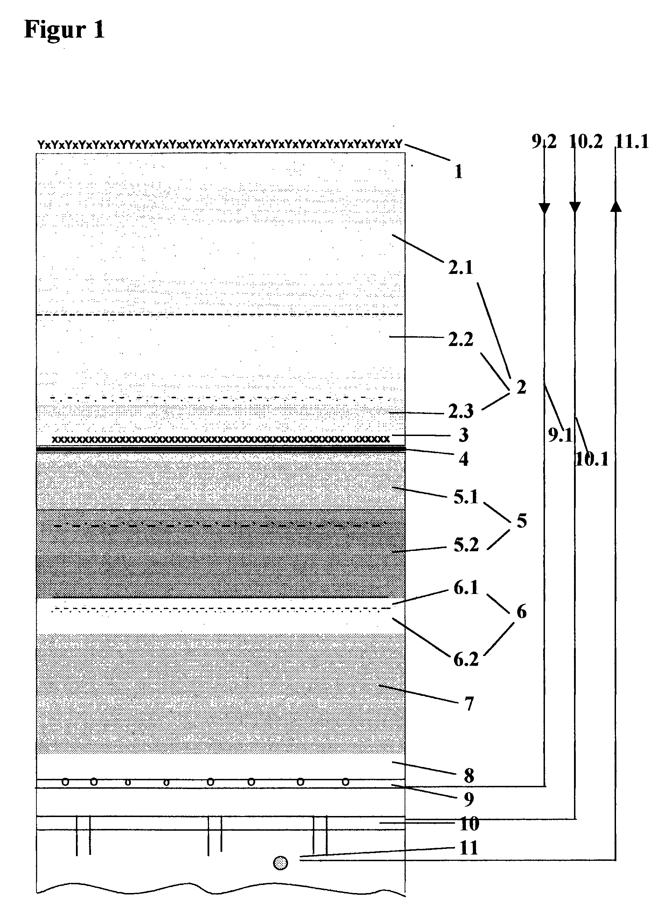

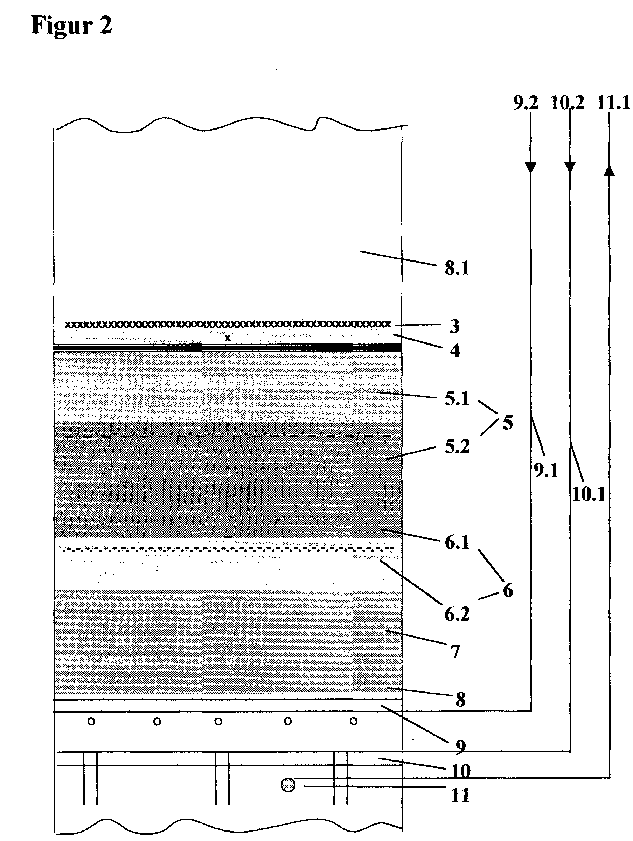

Ziel dieses erfinderischen Teils (s.a. Fig. 1 und 2) ist es, die zeitliche Verkürzung der Nachsorge durch Kombinationsstabilisierung von Deponien und Verfahren hierzu zu entwickeln indem,
- eine über Wasserzuführungsleitungen (9.1) großflächige Bewässerung eines Deponiekörpers vor der Abdichtung mit einem netzartigen Wasserverteilersystem (9) (Maschenweite 50-100cm) aus Kunststoffrohr, welche resistent gegen die auftretenden Deponiewässer sind, zu schaffen, in dem dies mit 1mm bis 3mm großen Löchern, im Abstand von 10cm bis 30cm versetzt sind und unterhalb der Profilierungsschicht (7) auf dem Deponiekörper aufgebracht werden. Wichtig ist das die Druckverhältnisse innerhalb des Rohrleitungssystems, welche eine ausreichende Druckstabilität für die Auflast des Deponiekörpers haben müssen, gleich sind und an allen Stellen eine gleichmäßiger Wasseraustritt ermöglicht wird. Die Wasserzuführung erfolgt unter geringen Überdruck, der je nach Erfordernissen gesteuert werden kann. Zur Bewässerung (9.2) ist gespeichertes,
   - abgeleitetes Oberflächenwasser und/oder
   - schwach belastetes Wasser aus der Drainage (3) und/oder
   - nach Prüfung abgeleitetes Sickerwasser aus dem Deponiekörper
   zu verwenden.
- Zusätzlich zur künstlichen Bewässerungstechnik ist während der Baumaßnahme mittels Luftzuführungsleitungen (10.1) eine in situ Belüftung in den Deponiekörper einzubauen, in dem Gasbrunnen, Luftlanzen oder sonst geeignete Luftverteilersysteme (10) in den Deponiekörper zur aeroben Stabilisierung eingesetzt werden. Über das Luftverteilersystem (10) wird Luft (10.2) mit geringen Überdruck zugeführt.

Die Kombination von gezielter Rückbefeuchtung und einer in situ Belüftung innerhalb eines geschlossenen Deponiekörpers mit einer intakten Sickerwassererfassung, und einer intakten Deponiegaserfassungsanlage ermöglicht eine erhebliche Verkürzung der Stabilisierungsphase einer Deponie.

### Phase 1

Nach Abdichten des Deponiekörpers kommt die Kombinationsstabilisierung durch Zuführung von Wasser (9.2) erst dann zur Anwendung, wenn die Deponiegasproduktion unter 50% der errechneten Werte fällt. Dies wird in der Regel, je nach Eigenfeuchte des Deponiekörpers, erst nach ca. 2-3 Jahren nach Schließung der Deponie eintreten. Durch die gezielte Rückbefeuchtung, nach Möglichkeit mit O₂-armen Wasser (9.2), erfolgt eine anaerobe Stabilisierung des Müllkörpers bei einer gleichzeitigen Verbesserung der Methangasausbeute. Es können damit Anlagen zur Deponiegasnutzung effizienter und wirtschaftlicher betrieben werden. Die zugeführte Wassermenge (9.2) ist so zu steuern, dass die Sickerwassermenge nicht steigt, das heißt im Optimum, die zugeführten Wassermengen (9.2) werden nur für die anaerobe bakterielle Zersetzung der organischen Substanzen verbraucht. Im gesamten Zeitraum der anaeroben Stabilisierung ist die Zuführung von Luftsauerstoff zu vermeiden. Im Deponiekörper entstehen exotherme Abbauprozesse der organischen Abfallbestandteile, deren Kontrolle über den optimalen Verlauf der anaeroben Aktivitäten auch über zusätzliche Temperaturmessungen (11.1) mittels Messsonden (11) erfolgen kann. Ein Absinken der Reaktionstemperatur erfordert eine geringfügige Zuführung von Wasser (9.2) Zu beachten ist weiterhin, dass die biologischen anaeroben Reaktionen mit einer Zeitverzögerung, die von der Zusammensetzung des Abfalls abhängig sind, auftreten. Die Phase 1 hat eine Zeitdauer von ca. 2-3 Jahren.

### Phase 2

Wenn eine aktive Entgasung nach abklingen der anaeroben Prozesse nicht mehr sinnvoll ist, schließt sich die aerobe Stabilisierung an, wobei die zunächst noch vorhandenen Methangasmengen biologisch stabilisiert werden. Die Milieubedingungen im Deponiekörper werden von anaerob in aerob umgewandelt. Die in situ Belüftung beschleunigt den Abbau noch biologisch verfügbarer organischer Substanzen bei einer gleichzeitigen Reduzierung des Stickstoffpotentials im Deponiekörper. Weiterhin wird der Kohlenstoffumsatz während der Belüftungsphase erheblich gesteigert. Die Abluftbehandlung erfolgt über die vorhandenen Gasbrunnen. Zur Abluftbehandlung können Biofilter, Filter aus Aktivkohle oder andere autotherme, nichtkatalytische Verfahren eingesetzt werden. Durch die aktive in situ Belüftung kommt es zu einem erheblichen Abbau der relevanten Schadstoffe des Sickerwassers, die soweit abgesenkt werden können, dass Sickerwasserreinigungsmaßnahmen entfallen können. Die Phase 2 hat eine Zeitdauer von ca. 1-2 Jahren.

### Phase 3

Nach der aeroben Phase (ca. 1-2 Jahre) ist die Luftzufuhr einzustellen, so dass ein erneutes anaerobes Milieu im Deponiekörper entstehen kann. An Hand der Analyse des Sickerwassers und des Methangehaltes kann auf die noch vorhandene biologische Aktivität geschlossen werden. Diese Prüfung ist unabdinglich zur Entscheidung, ob die 3.Phase zur Anwendung kommt. In diesem Fall ist die geringe Zugabe von Wasser (9.2) erforderlich wie dies bereits in der Phase 1 beschrieben wurde. Organische Substanzen die mittelschwer bis schwer abbaubar sind und im anaeroben Milieu nur über sehr lange Zeiträume (mehrere Jahrzehnte) abbaubar sind, werden durch das aeroben Milieu der Phase 2 soweit metabolisiert , dass sie in der anschließenden anaeroben Zwischenphase bei Sauerstoffarmut für den anaeroben Abbau zur Verfügung stehen.

### Phase 4

Die Phase 4 als entgültigen Abschluss der Stabilisierung beinhaltet eine erneute in situ Belüftung des Deponiekörpers, wenn dies erforderlich ist. Diese Entscheidung ist davon abhängig, ob das Sickerwasser im Bereich der umweltverträglichen Restkonzentrationen bzw. - frachten liegt.

Die Nachsorge durch Kombinationsstabilisierung von Deponien und den oben dargestellten Phasen führt dazu, dass die Nachsorgephase bis auf 10 Jahre verkürzt werden kann. Besonders günstige Voraussetzungen sind mit mineralischen Kombinationsoberflächenabdichtungen in Verbindung mit einer KDB (4) gegeben.

Sinnvollerweise ist diese Kombinationsstabilisierung auch für temporäre Zwischenabdeckungen einsetzbar.

Alternative Abdichtungen mit Kapillarsperren bieten dagegen keine optimalen Voraussetzungen, da es bei extremen hydraulischen Belastungen durch Niederschläge zu Wassereinbrüchen in den Deponiekörper kommen kann.

Die Erfindung ist für Oberflächen- und Zwischenabdichtungssysteme für Deponien der Deponieklassen I: (Monodeponien- Erdaushub), Deponieklasse II: (Hausmüll-Siedlungsabfall) und Deponieklasse III: (Sonderabfall), sowie zur Absicherung von Altlastenstandorten und den Einsatz in Rekultivierungsschichten anwendbar.

Die Erfindung wird mit Fig.1 als Oberflächenabdichtungssystem erläutert, in dem
- eine Vegetationsschicht (1), bestehend aus einer Rasensaat als Erosionsschutz,
- eine Rekultivierungsschicht (2), bestehend aus Wasserhaushaltsschichten die, mit einer Gesamtschichtstärke von 0,7m bis 2,0m, die grundsätzlich die Aufgabe haben, im Zusammenwirken mit der Vegetation einen möglichst großen Teil des eindringenden Niederschlagswassers zu evapotranspirieren und den nichtaufnahmefähigen Anteil schadensfrei zum Dichtungselement zu führen. Darüber hinaus ist die Wasserhaushaltsschicht so auszubilden, dass die Vegetation möglichst gute Wachstumsbedingungen vorfindet. Weiterhin hat sie das Dichtungselement vor Wurzel- und Frosteinwirkungen zu schützen. Deshalb wird die Rekultivierungsschicht in Schichten mit unterschiedlichen Wasserdurchlässigkeiten getrennt:
- in eine Rekultivierungsschicht (2.1) die als Oberboden oder Vegetationsschicht zu betrachten ist und in der Bodenart mit einem stark tonigen Schluff zu vergleichen ist mit einer Wasserdurchlässigkeit (k= 4 x 10⁻⁶ m/s bis k= 5 x 10⁻⁷ m/s), indem einem tonigenschluffigen Bodenaushub mit 60-80 Gew.- %, 10-20 Gew.- % bentonitgebundene Gießereialtsande, -stäube und 10-20 Gew.- % geeignete ausgefaulte Gewässer- und/oder Klärschlämme zugemischt werden, die nicht zu stark verdichtet werden sollten, um der Bildung von Makroporen durch Trockenrisse vorzubeugen, mit einer Schichtstärkeanteil von 45-50% an der Gesamtschichtstärke der Rekultivierungsschicht (2) und
- in eine Rekultivierungsschicht (2.2) die gleichzeitig die Aufgabe einer Wasserhaushaltsschicht hat und gleichzeitig als Wurzelboden mit einer Wasserdurchlässigkeit (k= 5 x 10⁻⁸ m/s bis k= 8 x 10⁻⁸ m/s) bestehend aus einem Bodenaushub aus leicht lehmigen Sand mit einem Anteil von 45-70 Gew.- % 20-35 Gew.- % der bentonitgebundene Gießereialtsande, -stäube und 10-20 Gew.- % geeignete ausgefaulte Gewässer- und/oder Klärschlämme zugemischt werden mit 40-45% an der Gesamtschichtstärke der Rekultivierungsschicht (2), sowie
- einer Rekultivierungsschicht (2.3) als Wurzelsperre und gleichzeitiger Entwässerungsschicht mit einer höheren Wasserdurchlässigkeit (k= 5 x 10⁻² m/s bis k= 5 x 10⁻⁴ m/s) bestehend aus einem schwach Grob-Kiessand und/oder hochregeneriertem Gießereialtsand mit sehr geringem Bentonitanteil oder einem kunstharzgebundenen Gießereialtsand, Gießereischlacken und BSR- Material, mit einem Schichtstärkeanteil von 5-15% an der Gesamtschichtstärke der Rekultivierungsschicht (2), sowie
- einer Schutz- und Dränagematte (3) (vom Stand der Technik bekannt),
- einer Kunststoffdichtungsbahn (KDB) (4) (vom Stand der Technik bekannt),
- einer mineralischen Dichtungsschicht (5) aus bentonitgebundenem Gießereialtsand und/oder bentonitgebundenem Gießereistaub mit einer Schichtstärke von 0,2m bis 0,7m die mit einem Einbauwassergehalt von 5-35%, vorzugsweise 14,5% eingestellt ist, oder schluffiger, toniger Erdaushub; schluffige Tone; Bauschuttrecyclingmaterial; Kies - Sandgemische als Traggerüst, in der Körnung 0-32 mm, trockner bentonithaltiger Gießereialtsand, -staub als Füllstoff mit teilweise abdichtender Wirkung durch das Bentonit (Bentonitgehalt ca. 3-15% Gew.)%), ausgefaulter, mit Kalk und/oder Gießereialtsand, -staub, nachbehandelter Klärschlamm mit TR 35-60% aus einem Klärwerk, welcher der Klärschlammverordnung entspricht oder in zwei Schichten getrennt eingebaut, indem die Schicht (5.2) aus einem gut verdichtbaren schluffigen, tonigen Erdbaumaterial; schluffigen Tonen als abdichtender und plastifizierender Stoff und aus der Schicht (5.1), bestehend aus bentonitgebundenem Gießereialtsand und/oder bentonitgebundenem Gießereistaub. Zwischen den Schichten (5.1) und (5.2) ist kein zusätzliches Trennvlies erforderlich. Die Schichtstärken können variabel gewählt werden, je nach vorliegenden Materialmengen. Diese kombinierte Dichtungsschichtvariante hat den Vorteil, dass die Schicht (5.1) als selbstheilende Schicht dient, falls Spannungsrisse in der Schicht (5.2) auftreten sollten. Es wird ein Einbauwassergehalt von 8-30%, vorzugsweise 14,5% eingestellt.
- einer gaswegsamen Schicht 6, mit einer Schichtstärke von 30-40cm, welche sich unterteilt in,
- die Abdeckung der gaswegsamen Schicht (6.1), bestehend aus einem mineralischen Filtermaterial in der Korngröße 0-8 mm, wie Hausmüllverbrennungsschlacke (HMV-Schlacken) und/oder Bauschuttrecyclingmaterial (BSR-Material), mit einer Schichtstärke 5-30% Anteil an der Gesamtschichtstärke der gaswegsamen Schicht (6) und
- die gaswegsame Schicht (6.2), mit einer Korngröße von 4 mm bis 52 mm bestehend aus Recyclingschotter aus Gleisanlagen und/ oder gebrochener Gießereischlacke und/ oder HMV- Schlacken und /oder BSR- Material mit einer Schichtstärke 70-95% (Anteil an der Gesamtschichtstärke der gaswegsamen Schicht (6))
- und die Profilierungsschicht (7), mit einer variablen Schichtstärke aus Gießereireststoffen, wie bentonitgebundenem Gießereialtsand und/oder bentonitgebundenem Gießereistaub und/oder Gießereischlacken besteht, vorzugsweise BSR- Material im Gemisch mit eisenhaltigem Filterstaub mit 5-40 Gew.% aus Eisen-, Stahlgießerein und 60-95 Gew.% BSR- Material mit der Korngröße 0-32 mm,
- welche auf den Müllkörper (8), aufgebracht werden.

Eine Zwischenabdeckung Fig. 2, wird mit dem gleichen Schichtenaufbau hergestellt, mit der Ausnahme, dass die Vegetationsschicht (1) und die Rekultivierungsschicht (2) entfällt.

Aus diesem Schichtenaufbau Fig.1 und Fig.2 ergeben sich erfindungsgemäß folgende Vorteile:
1. Die Rekultivierungsschicht (2,1), mit einer Wasserdurchlässigkeit k= 4 x 10⁻⁶ m/s bis k= 5 x 10⁻⁷ m/s erfüllt die Aufgabe als Vegetationsschicht, durch die geringe Verdichtung ist eine Wasseraufnahme und somit Wasserverfügbarkeit für die angesiedelte Vegetation in sehr gutem Maße gewährleistet. Durch den zusätzlichen Einsatz von Klärschlamm werden dem Rekultivierungsboden Nährstoffe zugeführt, so dass minderwertige schluffige Erdbaustoffe aus Baustellenaushub mit zum Einsatz kommen können.
2. Die Rekultivierungsschicht (2.2), wird im unteren Bereich als Wasserhaushaltsschicht ausgebildet welche gleichzeitig die Funktion als Wurzelboden hat und mit einer Wasserdurchlässigkeit k= 5 x 10⁻⁸ m/s bis k= 8 x 10⁻⁸ verdichtet eingebaut wird. Diese Schicht erfüllt zwei wesentliche Aufgaben, indem sie als Wasserspeicher dient und dieses Speicherwasser wieder in niederschlagsarmen Zeiten an die Pflanzen abgibt Diese Schicht darf auf keinen Fall werte k Werte von ≤ 5 x 10⁻⁹ m/s erreichen, da sonst Staunässe auftritt. Durch den zusätzlichen Einsatz von bentonitgebundenen Gießereialtsand und Klärschlamm, werden der Rekultivierungsschicht Nährstoffe zugeführt, so dass minderwertige lehmig- sandige Erdbaustoffe aus Baustellenaushub mit zum Einsatz kommen können.
3. Die Rekultivierungsschicht (2.3), wird im untersten Bereich (Auflage auf die Schutz- und Dränagematte) mit einer höheren Wasserdurchlässigkeit k= 5 x 10⁻² m/s bis k= 5 x 10⁻⁴ eingebaut. Sie dient als zusätzliche Entwässerungsschicht und als Wurzelsperre für die nachfolgenden Dichtungselemente Dieser Schichtenaufbau hat den Vorteil, dass sich im Langzeitverhalten eine wasserführende Schicht aufbaut, die einem Grundwasserleiter nahe kommt.
4. Die Verlegung der KDB (4) erfordert keine besonderen Schutzschichten und kann direkt auf die mineralische Dichtung (5) erfolgen.
5. Der Einbau ist durch den trocken angelieferten Gießereialtsand in der mineralischen Dichtung (5) nicht so witterungsabhängig wie bei natürlichen Tonen/ Schluffen.
6. Auf ein zusätzliches Schutzvlies zwischen der mineralischen Dichtung (5) und der gaswegsamen Schicht (6), kann verzichtet werden, da diese funktionelle Aufgabe die Abdeckung der gaswegsamen Schicht (6.1) übernimmt.
7. Die Profilierungsschicht (7), aus BSR- Material im Gemisch mit eisenhaltigem Filterstaub, unter Zugabe von Wasser bildet eine sehr gute, standfeste Auflage für den weiteren Aufbau der gesamten Oberflächendichtung.
8. Das Gemisch der Profilierungsschicht (6), aus BSR- Material mit eisenhaltigem Filterstaub ist auch im Wegebau während der gesamten Baumaßnahme und während des Deponiebetriebes geeignet. Hier sind Schichtstärken von 0,1m bis 0,5m erforderlich, die mittels Raupe eingebaut und mit Glattmantelwalze verdichtet werden. Ein Aufsprühen von Wasser mittels Wasserwagen verhindert nach dem Einbau eine Staubentwicklung. Durch Niederschlagswasser erfolgt die Verfestigung und Erhärtung dieses Gemisches, welches eine hohe Standfestigkeit und nur geringe Erosionseigenschaften hat.

Das Verfahren zur Herstellung eines mineralischen Oberflächen- und Zwischenabdichtungssystems für Deponien, Abdeckungen von Altlasten und Rekultivierungsschichten, ist dadurch charakterisiert, dass die Komponenten:
- der Rekultivierungsschicht (2), mit einer Gesamtschichtstärke von 0,7-2,0m aus
- der Rekultivierungsschicht (2.1) (45-50% der Gesamtschichtstärke von (2)), aus
   - trocknen bentonithaltigen Gießereialtsand, -staub (Bentonitgehalt von 3-15 Gew.)%) mit 10-20 Gew. % vorzugsweise 15 Gew. %,
   - ausgefaultem, mit Kalk und/oder Gießereialtsand, -staub nachbehandelten
   - Gewässer-und/oder Klärschlamm mit TR 35-60 %, welcher der Klärschlammverordnung entspricht, als Nährstoff, mit 10-20 Gew. % vorzugsweise 15 Gew. %,
   - und einem humus- bzw. nährstoffarmen tonigen- schluffigen Bodenaushub mit 60-80 Gew. % vorzugsweise 70 Gew. % bestehen,
- und der Rekultivierungsschicht (2.2) (40-45% der Gesamtschichtstärke von (2)),
   - trocknen bentonithaltigen Gießereialtsand, -staub (Bentonitgehalt von 3-15 Gew. %) mit 20- 35 Gew. % vorzugsweise 25 Gew. %,
   - ausgefaultem, mit Kalk und/oder Gießereialtsand, -staub nachbehandelten
   - Gewässer-und/oder Klärschlamm mit TR 35-60 %, welcher der Klärschlammverordnung entspricht, als Nährstoff, mit 10-20 Gew. % vorzugsweise 15 Gew. %,
   - und einem humus- bzw. nährstoffarmen leicht lehmig- sandigen Bodenaushub mit 45-70 Gew. % vorzugsweise 60 Gew. % bestehen,
- und der Rekultivierungsschicht (2.3) (5- 15% der Gesamtschichtstärke von (2)),
   - aus einem Gemisch aus trocknem hochregenerierten Gießereialtsand mit sehr geringem Bentonitanteil und/oder einem kunstharzgebundenen Gießereialtsand mit 20-40 Gew. %, vorzugsweise 30 Gew. %
   - und einem gering humus- bzw. nährstoffreichen körnigen Bodenaushub mit 20-70 Gew. % vorzugsweise 55 Gew. % bestehen und
   - Gießereischlacken, BSR-Material in den Korngrößen 0-32mm mit 10-20 Gew.% vorzugsweise 15 Gew. % besteht,
- für die mineralische Dichtungsschicht (5), mit einer Gesamtschichtstärke von 20-70cm,
   - bentonitgebundener Gießereialtsand, -staub 100 Gew.% mit Wasser vermischt und ein Einbauwassergehalt von 5-35 Gew.% - Anteilen besteht oder
   - einem Gemisch aus 25-50 Gew.% vorzugsweise 40 Gew,% schluffiger, toniger Erdaushub; schluffige Tone; Bauschuttrecyclingmaterial; Kies - Sandgemische als Traggerüst, in der Körnung 0-32mm, 25-50 Gew.% vorzugsweise 40 Gew.% trockner bentonithaltiger Gießereialtsand, -staub als Füllstoff mit teilweise abdichtender Wirkung durch das Bentonit (Bentonitgehalt ca. 3-15% Gew.%), 5-40 Gew.% vorzugsweise 20 Gew.% ausgefaulter, mit Kalk und/oder Gießereialtsand,-staub, nachbehandelter Klärschlamm mit TR 35-60% aus einem Klärwerk, welcher der Klärschlammverordnung entspricht, als abdichtender und plastifizierender Stoff. Es wird ein Einbauwassergehalt von 8-30%, vorzugsweise 14,5% eingestellt oder
   - die mineralische Dichtungsschicht (5) aus der Schicht (5.2), welche aus einem gut verdichtbarem schluffigen, tonigen Erdbaumaterial; schluffigen Tonen als abdichtender und plastifizierender Stoff und aus der Schicht (5.1), bestehend aus bentonitgebundenem Gießereialtsand und/oder bentonitgebundenem Gießereistaub aufgebaut ist,
- für die gaswegsame Schicht (6), mit einer Gesamtschichtstärke von 30-40cm bestehend aus
   - der gaswegsamen Schicht (6.1) (5-30% der Gesamtschichtstärke von (6)), mit einer Kömungslinie von 0-8mm, HMV-Schlacke
      und/ oder Gießereischlacken in dem Komgrößenbereich 0-8mm mit 100 Gew.%-Anteilen Verwendung findet,
   - und der gaswegsamen Schicht (6.2) (70-95% der Gesamtschichtstärke von (6)), mit einer Kömungslinie von 4-56mm, HMV-Schlacke und/ oder Gießereischlacken in dem Komgrößenbereich 4-52mm mit 100 Gew.% - Anteilen Verwendung findet,
- für die Profilierungsschicht (7), die in der Schichtstärke variabel ist, aus 60-95 Gew. % BSR- Material und 5-40 Gew.% eisenhaltigen Filterstaub besteht,
- Diese Materialien werden auf den Deponiekörper (8) aufgebracht.

Für den Wegebau innerhalb des Deponiegeländes kann weiterhin ein Material verwendet werden, welches aus 60-95 Gew.% BSR-Material und 5-40 Gew.% eisenhaltigen Filterstaub besteht.

Diese Einsatzstoffe, außer für die gaswegsame Schicht (6), sind in einer stationären Mischanlage mittels Zwangsmischer, unter Zugabe des erforderlichen Wasseranteils, bis zur Einstellung des optimalen Einbauwassergehaltes, homogen zu vermischen. Die Dosierung der unterschiedlichen Materialien erfolgt in der Mischanlage mit Kastenbeschicker und Wiegebändern. Das gemischte Material wird lagenweise dann im Baufeld aufgebracht und auf die Soll - Dichte mit einer Glattmantelwalze verdichtet.

Eine weitere Möglichkeit der homogenen Vermischung kann direkt auf dem Baufeld erfolgen. Hier erfolgt die Dosierung durch exaktes, lagenweises Aufbringen (mit Hilfe eines Rundumlasers ± 1cm) der zu mischenden Materialien und durch genaue Einstellung der Frästiefe mit einer hochtourigen Baufräse. Anschließend wird das vorbereitete Baufeld mit einer schweren Baufräse, gegebenenfalls unter Zugabe von Wasser, bis zur Einstellung des optimalen Einbauwassergehaltes, durchgefräst, wobei die Frästiefe auf ca. 25cm eingestellt wird. Vor einem weiteren Fräsgang wird das vorgemischte Material mit einer Glattmantelwalze vorverdichtet und gefräst, um eine weitgehende Homogenisierung zu erreichen. Danach wird das gemischte Material lagenweise auf die Soll - Dichte mit einer Glattmantelwalze verdichtet.

### Verwendete Bezugszeichen

- **1**: Vegetationsschicht als Erosionsschutz
- **2**: Rekultivierungsboden
- **2.1**: Rekultivierungsboden- Vegetationsschicht
- **2.2**: Rekultivierungsboden- Wasserhaushaltsschicht
- **2.3**: Rekultivierungsboden- Entwässerungsschicht
- **3**: Schutz- und Drainagematte
- **4**: Kunststoffdichtungsbahn (KDB)
- **5**: Mineralische Dichtungsschicht
- **5.1**: bentonitgebundener Gießereialtsand und/oder bentonitgebundener Gießereistaub
- **5.2**: gut verdichtbares schluffiges, toniges Erdbaumaterial; schluffige Tone als abdichtender und plastifizierender Stoff
- **6**: Gaswegsame Schicht
- **6.1**: Gaswegsame Schicht mit der Körnung 0-8mm
- **6.1**: Gaswegsame Schicht mit der Körnung 4-52mm
- **7**: Profilierungsschicht
- **8**: Deponiematerial
- **8.1**: Deponiematerial zwischen Oberflächen- und Zwischenabdichtung
- **9**: Wasserverteilersystem
- **9.1**: Wasserzuführungsleitung
- **9.2**: O₂-armes, gespeichertes, abgeleitetes Oberflächenwasser
- **10**: Luftverteilersystem
- **10.1**: Luftzuführungsleitung
- **10.2**: Luft
- **11**: Temperaturmesssonde
- **11.1**: Temperaturmessungen

## Patentansprüche

1. Mineralische Oberflächen- und Zwischenabdichtungssysteme für Deponien und Absicherung von Altlastenstandorten unter Verwendung von industrielle Abfallstoffen,
dadurch gekennzeichnet,
dass für Deponieabdeckungen oder Absicherung von Altlastenstandorten, verbunden mit einem Dichtungssystem, auf dem Deponiekörper (8) eine Profilierungsschicht (7) aufgebracht wird, in dem über die Profilierungsschicht (7) eine gaswegsame Schicht (6) und eine mineralische Dichtungsschicht (5) aufgebracht wird, darauf eine Kunststoffdichtungsbahn (4) verlegt wird, auf dieser erfolgt die Verlegung einer Schutz- und Drainagematte (3), mit darüber liegender Rekultivierungsschicht (2) und der Vegetationsschicht.

2. Mineralische Oberflächen- und Zwischenabdichtungssysteme für Deponien und Absicherung von Altlastenstandorten unter Verwendung von industriellen Abfallstoffen,
dadurch gekennzeichnet,
dass eine Zwischenabdeckung für Deponien, verbunden mit einem Dichtungssystem, auf dem Deponiekörper (8) eine Profilierungsschicht (7) aufgebracht wird, in dem über die Profilierungsschicht (7) eine gaswegsame Schicht (6) und eine mineralische Dichtungsschicht (5) aufgebracht wird, darauf eine Kunststoffdichtungsbahn (4) verlegt wird, auf dieser erfolgt die Verlegung einer Schutz- und Drainagematte (3), mit darüber liegendem Deponiematerial (8.1).

3. Mineralische Oberflächen- und Zwischenabdichtungssysteme für Deponien und Absicherung von Altlastenstandorten unter Verwendung von industriellen Abfallstoffen, nach Anspruch 1, dadurch gekennzeichnet,
dass die Rekultivierungsschicht (2) mit einer Gesamtschichtstärke von 0,7m bis 2,0m, in eine obere Rekultivierungsschicht (2.1) mit 45-50% der Gesamtschichtstärke von (2), als wasserdurchlässige Vegetationsschicht mit k= 4 x 10⁻⁶ m/s bis k= 5 x 10⁻⁷ und eine untere Rekultivierungsschicht (2.2) mit 40-45% der Gesamtschichtstärke von (2), als Wasserhaushaltsschicht mit k= 5 x 10⁻⁸ m/s bis k= 8 x 10⁻⁸ m/s hat und einer untersten Rekultivierungsschicht (2.3) mit 5-15% Gesamtschichtstärke von (2), als Entwässerungsschicht und Wurzelsperre mit k= 5 x 10⁻² m/s bis k= 5 x 10⁻⁴ m/s, die getrennt hergestellt und eingebaut werden.

4. Mineralische Oberflächen- und Zwischenabdichtungssysteme für Deponien und Absicherung von Altlastenstandorten unter Venrvendung von industriellen Abfallstoffen, nach den Ansprüchen 1 und 3, dadurch gekennzeichnet,
dass ein Rekultivierungsschicht (2) aus der
oberen Rekultivierungsschicht (2.1), aus
- trocknen bentonithaltigen Gießereialtsand, -staub (Bentonitgehalt von 3-15 Gew. %) mit 10-20 Gew. % vorzugsweise 15 Gew. %,
- ausgefaultem, mit Kalk und/oder Gießereialtsand, -staub nachbehandelten
- Gewässer- und/oder Klärschlamm mit TR 35-60 %, welcher der Klärschlammverordnung entspricht, als Nährstoff, mit 10-20 Gew. % vorzugsweise 15 Gew. %,
- und einem humus- bzw. nährstoffarmen tonigen- schluffigen Bodenaushub mit 60-80 Gew. % vorzugsweise 70 Gew. % bestehen und der
- unteren Rekultivierungsschicht (2.2) aus
trocknen bentonithaltigen Gießereialtsand, -staub (Bentonitgehalt von 3-15 Gew. %) mit 20- 35 Gew. % vorzugsweise 25 Gew. %,
- ausgefaultem, mit Kalk und/oder Gießereialtsand, -staub nachbehandelten
- Gewässer- und/oder Klärschlamm mit TR 35-60 %, welcher der Klärschlammverordnung entspricht, als Nährstoff, mit 10-20 Gew. % vorzugsweise 15 Gew. %,
- und einem humus- bzw. nährstoffarmen leicht lehmig- sandigen Bodenaushub mit 45-70 Gew. % vorzugsweise 60 Gew. % bestehen, untersten Rekultivierungsschicht (2.3) aus
- einem Gemisch aus trocknem hochregeneriertem Gießereialtsand mit sehr geringem Bentonitanteil und/oder einem kunstharzgebundenen Gießereialtsand mit 20-40 Gew. %, vorzugsweise 30 Gew. %
- und einem gering humus- bzw. nährstoffreichen körnigen Bodenaushub mit 20-70 Gew. % vorzugsweise 55 Gew. % bestehen und
- Gießereischlacken, BSR- Material in den Korngrößen 0-32mm mit 10-20 Gew. % vorzugsweise 15 Gew. % besteht,

5. Mineralische Oberflächen- und Zwischenabdichtungssysteme für Deponien und Absicherung von Altlastenstandorten unter Verwendung von industriellen Abfallstoffen, nach den Ansprüchen 1 und 2, dadurch gekennzeichnet,
dass die mineralische Dichtungsschicht (5) eine Schichtstärke von 20-70cm hat und aus bentonitgebundenem Gießereialtsand, -staub (Bentonitgehalt 3-15 Gew.%) zu 100 Gew.% mit Wasser vermischt und ein Einbauwassergehalt von 5-35 Gew.% - Anteilen und einem k-Wert von 5 x 10⁻⁹ m/s besteht.

6. Mineralische Oberflächen- und Zwischenabdichtungssysteme für Deponien und Absicherung von Altlastenstandorten unter Verwendung von industriellen Abfallstoffen, nach den Ansprüchen 1 und 2, dadurch gekennzeichnet,
dass die mineralische Dichtungsschicht (5) eine Schichtstärke von 20-70cm hat und aus einem Gemisch aus schluffigen, tonigen Erdaushub; schluffigen Tonen; Bauschuttrecyclingmaterial; Kies - Sandgemische als Traggerüst, mit 25-50 Gew.% vorzugsweise 40 Gew.% in der Körnung 0-32mm und trockner bentonithaltiger Gießereialtsand, -staub als Füllstoff mit teilweise abdichtender Wirkung durch das Bentonit (Bentonitgehalt ca. 3-15% Gew.%) mit 25-50 Gew.% vorzugsweise 40 Gew.% und ausgefaulten, mit Kalk und/oder Gießereialtsand, -staub, nachbehandelter Klärschlamm mit TR 35-60% aus einem Klärwerk, welcher der Klärschlammverordnung entspricht, als abdichtender und plastifizierender Stoff mit 5-40 Gew.% vorzugsweise 20 Gew.%, besteht. Es wird ein Einbauwassergehalt von 8-30%, vorzugsweise 14,5% eingestellt.

7. Mineralische Oberflächen- und Zwischenabdichtungssysteme für Deponien und Absicherung von Altlastenstandorten unter Verwendung von industriellen Abfallstoffen, nach den Ansprüchen 1 und 2, dadurch gekennzeichnet,
dass die mineralische Dichtungsschicht (5) eine Schichtstärke von 20-70cm hat und in zwei Schichten getrennt eingebaut, in dem die Schicht (5.1) aus bentonitgebundenen Gießereialtsand und/oder bentonitgebundenen Gießereistaub und aus der Schicht (5.2), welche aus einem gut verdichtbaren schluffigen, tonigen Erdbaumaterial; schluffigen Tonen als abdichtender und plastifizierender Stoff besteht.

8. Mineralische Oberflächen- und Zwischenabdichtungssysteme für Deponien und Absicherung von Altlastenstandorten unter Verwendung von industriellen Abfallstoffen, nach den Ansprüchen 1, 2, 4 und 6 dadurch gekennzeichnet,
dass nach der maschinellen Entwässerung des Gewässer-, und/oder Klärschlamms trockener bentonithaltiger Gießereisand und/oder -staub mit 5-35 Gew. % und einem Bentonitgehalt von 3-15 Gew. % eingemischt wird.

9. Mineralische Oberflächen- und Zwischenabdichtungssysteme für Deponien und Absicherung von Altlastenstandorten unter Verwendung von industriellen Abfallstoffen, nach den Ansprüchen 1 und 2, dadurch gekennzeichnet,
dass die gaswegsame Schicht (6) mit einer Gesamtschichtstärke von 30-40cm, aus einer oberen Schichten (6.1), bestehend aus einem mineralischen Filtermaterial in der Korngröße 0mm - 8mm, wie Hausmüllverbrennungsschlacke (HMV-Schlacken) und/oder Bauschuttrecyclingmaterial (BSR-Material), mit einer Schichtstärke 5-30% Anteil an der Gesamtschichtstärke der gaswegsamen Schicht (6) und einer unteren Schicht (6.2) mit einer Korngröße von 4mm bis 52mm aus Recyclingschotter aus Gleisanlagen und/oder gebrochener Gießereischlacke und/oderHMV -Schlacken und/oder BSR-Material mit einer Schichtstärke 70-95% Anteil an der Gesamtschichtstärke der gaswegsamen Schicht (6).

10. Mineralische Oberflächen- und Zwischenabdichtungssysteme für Deponien und Absicherung von Altlastenstandorten unter Verwendung von industriellen Abfallstoffen, nach den Ansprüchen 1 und 2, dadurch gekennzeichnet,
dass die Profilierungsschicht (7) mit einer variablen Schichtstärke aus Gießereireststoffen wie bentonitgebundenem Gießereialtsand und/oder bentonitgebundenem Gießereistaub und/oder Gießereischlacken besteht, vorzugsweise BSR-Material im Gemisch mit eisenhaltigen Filterstaub mit 5-40 Gew.% aus Eisen-, Stahlgießereien und 60-95 Gew.% BSR-Material mit der Korngröße 0-32 mm, besteht.

11. Verfahren zur Herstellung, Aufbereitung und Einbau von mineralischen Oberflächen- und Zwischenabdichtungssystemen für Deponien und Absicherung von Altlastenstandorten unter Verwendung von industriellen Abfallstoffen, nach den Ansprüchen 1, 2, 3, 4, 5, 6 und 9, dadurch gekennzeichnet,
dass die Herstellung des Gemisches in einer stationären Mischanlage mittels Zwangsmischer, gegebenenfalls unter Zugabe von Wasser, bis zum optimalen Einbauwassergehalt, in dem das Gemisch lagenweise aufgebracht und auf die Soll- Dichte mit einer Glattmantelwalze verdichtet wird.

12. Verfahren zur Herstellung, Aufbereitung und Einbau von mineralischen Oberflächen- und Zwischenabdichtungssystemen für Deponien und Absicherung von Altlastenstandorten unter Verwendung von industriellen Abfallstoffen, nach den Ansprüchen 1, 2, 3, 4, 5, 6 und 9, dadurch gekennzeichnet, dass im Baufeld durch exaktes, lagenweises Aufbringen der einzelnen Materialien und anschließend durch fräsen mittels Bodenfräsen, gegebenenfalls unter Zugabe von Wasser, bis zum optimalen Einbauwassergehalt erfolgt und anschließend auf die Soll-Dichte mit einer Glattmantelwalze verdichtet wird.

13. Eisenhaltige Gießereialtsande, -stäube für den Wegebau innerhalb des Deponiegeländes dadurch gekennzeichnet,
dass ein Gemisch aus eisenhaltigen Gießereialtsand, -staub mit 5-40 Gew. % und 60-95 Gew. % und Wasser (5-20 Liter je 100 kg Gemisch), mit einer Schichtstärke 10cm bis 50cm durch eine Raupe eingebaut und mit einer Glattmantelwalze verdichtet wird.

14. Mineralische Oberflächen- und Zwischenabdichtungssysteme für Deponien und Absicherung von Altlastenstandorten unter Verwendung von industriellen Abfallstoffen, nach den Ansprüchen 1 und 2, dadurch gekennzeichnet,
dass Kombinationsstabilisierungssysteme zur Verkürzung der Nachsorge von Deponien nach deren Schließung, in dem eine Rückbefeuchtung und eine aerobe Belüftung des Deponiekörpers erfolgt und eine Kombinationsstabilisierung in mindestens zwei Phasen erfolgt, die sich aus einer großflächigen Rückbefeuchtung und einer anschließenden aeroben Belüftung zusammensetzt.

15. Mineralische Oberflächen- und Zwischenabdichtungssysteme für Deponien und Absicherung von Altlastenstandorten unter Verwendung von industriellen Abfallstoffen, nach den Ansprüchen 1, 2 und 14, dadurch gekennzeichnet,
dass zur Bewässerung O₂-armes, gespeichertes, abgeleitetes Oberflächenwasser und/oder schwach belastetes Wasser (9.2) aus der Drainage (3) und/oder nach Prüfung abgeleitetes Sickerwasser aus dem Deponiekörper verwendet wird, dass nur in den Mengen dem Deponiekörper zugeführt wird, dass die Sickerwassermengen nicht signifikant steigen.

16. Mineralische Oberflächen- und Zwischenabdichtungssysteme für Deponien und Absicherung von Altlastenstandorten unter Verwendung von industriellen Abfallstoffen, nach den Ansprüchen 1, 2 und 14, dadurch gekennzeichnet,
dass dem Deponiekörper im Anschluss an die Rückbefeuchtung Luft (10.2), über Luftzuführungsleitungen (10.1) und geeignete Luftverteilersysteme (10) zugeführt wird.

17. Mineralische Oberflächen- und Zwischenabdichtungssysteme für Deponien und Absicherung von Altlastenstandorten unter Verwendung von industriellen Abfallstoffen, nach den Ansprüchen 1, 2, 14, 15 und 16, dadurch gekennzeichnet,
dass die Stabilisierungsprozesse mit Temperaturmesssonden (11) überwacht werden.

18. Mineralische Oberflächen- und Zwischenabdichtungssysteme für Deponien und Absicherung von Altlastenstandorten unter Verwendung von industriellen Abfallstoffen, nach den Ansprüchen 1, 2, 14, 15, 16 und 17, dadurch gekennzeichnet,
dass bei unzureichender Stabilisierungsphase die Phasen 1 aus Anspruch 15 und die Phase 2 aus Anspruch 16 mit einem verkürzten zeitlichen Ablauf wiederholt werden.

19. Mineralische Oberflächen- und Zwischenabdichtungssysteme für Deponien und Absicherung von Altlastenstandorten unter Verwendung von industriellen Abfallstoffen, nach den Ansprüchen 1, 2, 14, 15, 16, 17 und 18, dadurch gekennzeichnet,
dass in der 1. Phase über Wasserzuführungsleitungen (9.1) großflächige Bewässerung eines Deponiekörpers vor der Abdichtung mit einem netzartigen Wasserverteilersystem (9) (Maschenweite 50-100cm) aus Kunststoffrohr, welche resistent gegen die auftretenden Deponiewässer sind, zu schaffen, in dem dies mit 1mm bis 3mm großen Löchern, im Abstand von 10cm bis 30cm versetzt sind und unterhalb der Profilierungsschicht (7) auf dem Deponiekörper aufgebracht werden. Wichtig ist, dass die Druckverhältnisse innerhalb des Rohrleitungssystems, welche eine ausreichende Druckstabilität für die Auflast des Deponiekörpers haben müssen, gleich sind und an allen Stellen eine gleichmäßiger Wasseraustritt ermöglicht wird. Die Wasserzuführung erfolgt unter geringem Überdruck, der je nach Erfordernissen gesteuert werden kann.

20. Mineralische Oberflächen- und Zwischenabdichtungssysteme für Deponien und Absicherung von Altlastenstandorten unter Verwendung von industriellen Abfallstoffen, nach den Ansprüchen 1, 2, 14, 15, 16, 17 und 18, dadurch gekennzeichnet,
dass in der 2. Phase die gesteuerte Rückbefeuchtung im anaeroben Milieu eingestellt wird und über eine aerobe Belüftung mittels Luftzuführungsleitungen (10.1) eine in situ Belüftung in den Deponiekörper eingebaut wird, in dem Gasbrunnen, Luftlanzen oder sonst geeignete Luftverteilersysteme (10) in den Deponiekörper zur aeroben Stabilisierung eingesetzt werden. Über das Luftverteilersystem wird Luft (10) mit geringen Überdruck zugeführt.
